(19) Europäisches Patentamt
European Patent Office
Office européen des brevets

(11) **EP 3 807 729 B1**

(12) **FASCICULE DE BREVET EUROPEEN**

(45) Date de publication et mention
de la délivrance du brevet:
**07.06.2023 Bulletin 2023/23**

(21) Numéro de dépôt: **19766062.4**

(22) Date de dépôt: **02.08.2019**

(51) Classification Internationale des Brevets (IPC):
**G05B 19/406** *(2006.01)*

(52) Classification Coopérative des Brevets (CPC):
**G05B 19/406;** G05B 2219/37349;
G05B 2219/37598; G05B 2219/49042

(86) Numéro de dépôt international:
**PCT/FR2019/051895**

(87) Numéro de publication internationale:
**WO 2020/049234 (12.03.2020 Gazette 2020/11)**

(54) **UNITE DE SUPERVISION DE LA PRESENCE D'UN COPEAU ENTRE UN SIEGE D'UN PORTE-OUTIL ET UN SUPPORT D'UNE BROCHE D'UNE MACHINE-OUTIL, SYSTEME DE DETECTION ET PROCEDE DE DETECTION ASSOCIES**

EINHEIT ZUR ÜBERWACHUNG DES VORHANDENSEINS VON SPÄNEN ZWISCHEN EINEM WERKZEUGAUFNAHMESITZ UND EINEM SPINDELTRÄGER EINER WERKZEUGMASCHINE, ZUGEHÖRIGES DETEKTIONSSYSTEM UND ZUGEHÖRIGES DETEKTIONSVERFAHREN

UNIT FOR MONITORING THE PRESENCE OF CHIPS BETWEEN A TOOL-HOLDER SEAT AND A SPINDLE SUPPORT OF A MACHINE TOOL, ASSOCIATED DETECTION SYSTEM AND ASSOCIATED DETECTION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2018 FR 1857885**

(43) Date de publication de la demande:
**21.04.2021 Bulletin 2021/16**

(73) Titulaire: **Digital Way**
**42000 Saint Etienne (FR)**

(72) Inventeur: **SCHWEITZER, Alain**
**69003 LYON (FR)**

(74) Mandataire: **Cabinet Laurent & Charras**
**CS 70 203**
**15 rue Camille de Rochetaillée**
**42005 Saint-Etienne Cedex 1 (FR)**

(56) Documents cités:
**EP-A2- 0 714 053     EP-A2- 1 988 436**

**Description**

**Domaine Technique**

L'invention concerne le domaine technique de l'usinage de pièces par une machine-outil et vise, plus particulièrement, une unité de supervision pour détecter la présence d'un copeau entre un siège d'un porte-outil et un support d'une broche d'une machine-outil. L'invention concerne également un procédé de détection et un système de détection associés.

L'invention trouve une application particulièrement avantageuse pour l'usinage de pièces en aluminium avec micro-lubrification.

**Techniques antérieures**

Pour limiter les déchets industriels, et notamment les problématiques de traitement des eaux sales, il est recherché de limiter la lubrification des pièces au cours de l'usinage de pièces industrielles. Pour ce faire, les techniques actuelles de micro-lubrification proposent d'accepter la projection de copeaux lors de l'usinage afin de limiter la lubrification des pièces à usiner.

Ainsi, les machines-outils à micro-lubrification comportent une enceinte dans laquelle la pièce à usiner est positionnée avec des éléments d'usinages résistants aux projections de copeaux lors de l'usinage.

Lors de certains processus d'usinage, il peut être requis de changer l'outil d'usinage. Ainsi, certaines machines-outils à micro-lubrification comportent un dispositif de préhension d'outils disposé dans l'enceinte et un ensemble d'outils accessibles de manière automatique par le dispositif de préhension.

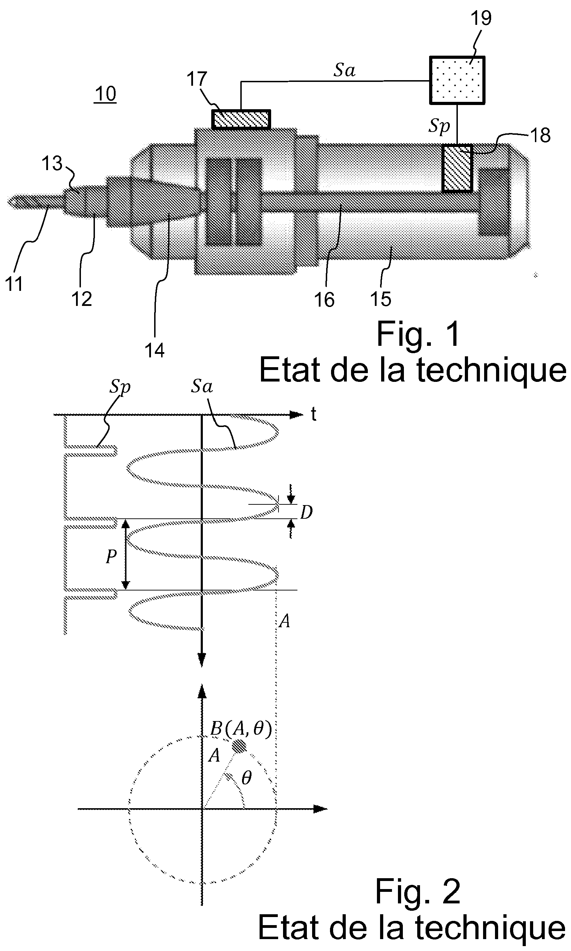

Pour s'adapter à des outils de différentes formes, tel qu'illustré sur la figure 1, les outils **11** sont montés dans un porte-outil **12** qui présente classiquement un siège et une partie **13** dans laquelle l'outil **11** est enserré. Le siège du porte-outil **12** est utilisé pour coopérer avec un support **14** d'une broche **15** afin de solidariser le porte-outil **12** sur l'arbre moteur **16** de la machine-outil. Par exemple, le siège présente généralement une forme tronconique dont l'angle d'ouverture est sensiblement équivalent à l'angle d'ouverture d'une forme tronconique complémentaire du support **14.**

Cependant, il existe un risque de dépôt d'un copeau entre le siège du porte-outil **12** et le support **14** de la broche **15** lorsque la machine-outil effectue un changement d'outils **11**. Par exemple, le système et le procédé décrits dans le document EP 0 714 053 A2 ne prennent pas en compte la présence potentielle de copeaux au niveau du porte-outil lors d'un changement d'outil et une limitation de la lubrification, c'est-à-dire du liquide de refroidissement, n'est pas envisageable du fait du principe de détection implémenté.

Pour détecter la présence d'un copeau et procéder à une opération automatique de nettoyage du siège et/ou du support **14**, il est connu de placer un premier capteur **17** d'accélération ou de vibration sur la broche **15** et un second capteur **18** de mesure de la position de l'arbre moteur **16.**

Le premier capteur **17** est configuré pour enregistrer les forces centrifuges appliquées sur le support **14**. Il en résulte un signal **Sa** de forme sinusoïdale illustré sur la figure 2 dont l'amplitude **A** représente l'intensité des forces centrifuges.

Tel qu'illustré sur la figure 2, le second capteur **18** génère un signal **Sp** présentant une impulsion électrique à chaque tour de l'arbre moteur **16**. Cette référence de position de l'arbre moteur **16** peut être obtenue par un codeur monté sur l'arbre moteur **16** ou par tout autre dispositif d'indexation, tel qu'un capteur inductif de position ou une cellule photoélectrique. La mesure simultanée du signal sinusoïdal **Sa** et du signal de position **Sp** de l'arbre moteur **16** permet de déterminer le déphasage **D** entre l'arbre moteur **16** et les forces centrifuges.

Une mesure en degré d'une phase $\theta$ est obtenue à partir de ce déphasage **D** en le divisant par la période **P** de l'arbre moteur **16** puis en le multipliant par 360. Le balourd **B(A,** $\theta$**)** de l'ensemble outil **11,** porte-outil **12** et broche **15** est ainsi obtenu en fonction de l'amplitude **A** et de la phase $\theta$ mesurées.

L'évolution de ce balourd **B (A,** $\theta$**)** permet de détecter la présence d'un copeau entre un siège d'un porte-outil **12** et un support **14** d'une broche **15** d'une machine-outil.

Pour ce faire, une première mesure d'un balourd est réalisée lors de la première utilisation d'un outil neuf dans un environnement sans copeaux volatiles. Cette première mesure permet d'obtenir une amplitude est une phase de référence. A chaque changement d'outil, une nouvelle mesure du balourd est réalisée et un copeau est détecté si l'amplitude mesurée n'est pas comprise dans une tolérance d'amplitude autour de l'amplitude de référence ou si la phase obtenue n'est pas comprise dans une tolérance de phase autour de la phase de référence.

Cependant, cette analyse du balourd ne permet pas de détecter efficacement la présence d'un copeau entre un siège d'un porte-outil **12** et un support **14** d'une broche **15** d'une machine-outil.

Le problème technique de l'invention est donc d'améliorer la détection de la présence d'un copeau entre un siège d'un porte-outil et un support d'une broche d'une machine-outil.

**Exposé de l'invention**

L'invention est issue d'une découverte selon laquelle la mesure du balourd n'est pas toujours efficace pour détecter un copeau entre un siège d'un porte-outil et un support d'une broche d'une machine-outil, car la position angulaire du copeau influe sur le balourd mesuré.

Pour résoudre ce problème, l'invention propose de détecter la présence d'un copeau entre un siège d'un porte-outil et un support d'une broche d'une machine-outil en fonction de la norme de la différence entre un balourd mesuré et un balourd de référence.

A cet effet, selon un premier aspect, l'invention concerne une unité de supervision de la présence d'un copeau entre un siège d'un porte-outil et un support d'une broche d'une machine-outil ; ladite unité de supervision comportant :

- des moyens d'obtention d'un balourd en fonction :

  - d'une amplitude correspondant à un maximum d'un premier signal représentant les forces centrifuges appliquées sur ledit siège et/ou ledit support ; et
  - d'une phase obtenue en fonction d'un déphasage entre ledit premier signal et un second signal représentant une position d'un arbre moteur entrainant ladite broche ; et

- des moyens de détermination de la présence d'un copeau en fonction d'une amplitude et d'une phase de référence.

L'invention se caractérise en ce que lesdits moyens de détermination sont configurés pour détecter la présence d'un copeau lorsque la norme de la différence entre ledit balourd et un balourd de référence est supérieure à une valeur seuil, ledit balourd de référence étant obtenu en fonction de ladite amplitude et ladite phase de référence.

L'invention permet ainsi de détecter la présence d'un copeau de manière uniforme quelle que soit la position angulaire du copeau. Il s'ensuit que l'invention permet de détecter plus efficacement la présence d'un copeau entre un siège d'un porte-outil et un support d'une broche d'une machine-outil. Par exemple, l'invention permet de détecter des copeaux qui n'étaient pas détectés par les mesures de tolérance précédemment réalisées.

En outre, compte tenu des erreurs de détection obtenues en utilisant les mesures de tolérance de l'état de la technique, il était particulièrement délicat de définir les seuils de tolérance acceptables pour l'amplitude ou la phase. La valeur seuil de l'invention est plus facile à définir car elle correspond directement à une taille minimum de copeau recherchée.

Par ailleurs, l'usure de l'outil peut entrainer une modification du balourd même lorsqu'il n'y a pas de copeau entre le siège du porte-outil et le support de la broche de la machine-outil. Il est possible d'anticiper ces modifications du balourd en sur-dimensionnant la valeur seuil en fonction d'une usure présupposée de l'outil. Dans ce mode de réalisation, ledit balourd de référence est mesuré lors de la première utilisation d'un outil neuf dans un environnement sans copeaux volatiles. Cependant, cette solution réduit l'efficacité de détection de faibles copeaux.

Une autre solution consiste à faire évoluer le balourd de référence. Ainsi, dans un autre mode de réalisation, ledit balourd de référence correspond à une précédente mesure de balourd dans laquelle aucun copeau n'a été détecté. En partant du constat que la dérive du balourd due à l'usure est faible entre deux mesures consécutives, ce mode de réalisation propose de modifier le balourd de référence après chaque mesure pour laquelle aucun copeau n'a été détecté. Ce mode de réalisation permet ainsi de limiter la valeur seuil de détection des copeaux de l'invention et de conserver une capacité de détection optimale tout au long de la durée de vie de l'outil.

Cependant, la mesure du balourd n'est fiable qu'à hauteur de la précision des appareils de mesure de l'amplitude et de la phase de chaque balourd. Pour limiter l'influence d'une dérive des appareils de mesure, un mode de réalisation de l'invention propose d'estimer le balourd de référence en fonction de plusieurs mesures précédentes de balourd dans lesquelles aucun copeau n'a été détecté.

Le balourd de référence est donc déterminé par une moyenne sur plusieurs mesures et l'influence de la dérive des appareils de mesure est limitée. Par exemple, il est possible d'utiliser les vingt précédentes mesures pour lesquelles aucun copeau n'a été détecté. Il est ainsi possible de fixer avec précision la valeur seuil de détection pour détecter des copeaux de très faible taille.

Cependant, il reste toujours possible qu'un copeau de taille très faible ne soit pas détecté et modifie néanmoins le balourd. Pour limiter l'influence d'un tel copeau sur la définition du balourd de référence, il est possible de filtrer les précédentes mesures du balourd pour ne conserver que les mesures les plus proches en estimant que, même si aucun copeau n'a été détecté, une importante modification de la mesure du balourd entre deux instants précédents pour lesquelles aucun copeau n'a été détecté, peut trahir la présence d'un copeau de faible taille. Selon ce mode de réalisation, lesdites mesures précédentes de balourd dans lesquelles aucun copeau n'a été détecté sont filtrées par lesdits moyens de détermination avant la détermination dudit balourd de référence.

Selon un second aspect de l'invention, l'invention concerne un système de détection d'un copeau entre un siège d'un porte-outil et un support d'une broche d'une machine-outil ; ledit système comportant :

- un premier capteur configuré pour enregistrer, au cours du temps, un premier signal représentant les forces centrifuges appliquées sur ledit siège et/ou ledit support ;
- un second capteur configuré pour enregistrer, au cours du temps, un second signal représentant une position d'un arbre moteur entrainant ladite broche ; et
- une unité de supervision configurée pour détecter la présence d'un copeau selon le premier aspect de l'invention.

Selon un mode de réalisation, ledit premier capteur correspond à un capteur d'accélération ou de vibration monté sur ladite broche ou ledit porte-outil.

Selon un mode de réalisation, ledit second capteur correspond à un codeur de position monté sur ledit arbre moteur, un capteur inductif de position ou une cellule photoélectrique.

Selon un troisième aspect de l'invention, l'invention concerne un procédé de détection de la présence d'un copeau entre un siège d'un porte-outil et un support d'une broche d'une machine-outil ; ledit procédé comportant les étapes suivantes :

- insertion d'un outil sur ladite broche ; ledit outil étant monté dans ledit porte-outil ;
- mise en rotation d'un arbre moteur entrainant ladite broche ;
- mesure d'une amplitude d'un premier signal représentant les forces centrifuges appliquées sur ledit siège et/ou ledit support ;
- mesure d'une phase en fonction d'un déphasage entre ledit premier signal et un second signal représentant une position dudit arbre moteur entrainant ladite broche ;
- détermination d'un balourd en fonction de l'amplitude et de la phase mesurées ;
- calcul de la norme de la différence entre ledit balourd et un balourd de référence ;
- détection de la présence d'un copeau lorsque la norme de cette différence est supérieure à une valeur seuil.

Selon un mode de réalisation, ledit procédé comporte une étape de nettoyage automatique dudit siège et dudit support lorsqu'un copeau est détecté.

## Description sommaire des figures

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 7 représentent :

- Figure 1 : une vue en coupe d'un outil monté dans une broche d'une machine-outil selon l'état de la technique ;
- Figure 2 : une représentation d'une mesure d'un balourd en fonction de deux évolutions temporelles de signaux issus des capteurs de la figure 1 selon l'état de la technique ;
- Figure 3 : une représentation de six mesures de balourds en fonction de six positions d'un copeau sur un siège d'un porte-outil de la figure 1 selon l'état de la technique ;
- Figure 4 : une représentation d'un balourd mesuré selon l'invention ;
- Figure 5 : deux représentations de l'évolution de l'amplitude et de la phase d'un balourd en fonction du nombre de pièces usinées ;
- Figure 6 : une représentation d'une étape de détermination d'un balourd de référence en fonction de plusieurs mesures précédentes de balourd selon un mode de réalisation de l'invention ; et
- Figure 7 : un organigramme de détection d'un copeau lors d'un changement d'outil d'une machine-outil selon un mode de réalisation de l'invention.

## Description détaillée de l'invention

L'invention est mise en oeuvre dans une architecture classique, par exemple une architecture similaire à celle de la figure 1 dans laquelle un outil **11** est monté dans un porte-outil **12** présentant un siège **20** et une partie **13** dans laquelle l'outil **11** est enserré. Le siège **20** du porte-outil **12** est utilisé pour coopérer avec un support **14** d'une broche **15** afin de solidariser le porte-outil **12** sur l'arbre moteur **16** de la machine-outil. Dans l'exemple de la figure 1, le siège **20** présente une forme tronconique dont l'angle d'ouverture est sensiblement équivalent à l'angle d'ouverture d'une forme tronconique complémentaire du support **14**. En variante, le siège **20** et le support **14** peuvent être cylindriques.

Il existe un risque de dépôt d'un copeau **C1-C6** entre le siège **20** du porte-outil **12** et le support **14** de la broche **15** lorsque la machine-outil effectue un changement d'outils **11**.

Pour détecter la présence d'un copeau et procéder à une opération automatique de nettoyage du siège et/ou du support **14**, deux capteurs **17**, **18** sont utilisés : un premier capteur **17** d'accélération ou de vibration sur la broche **15** et un second capteur **18** de mesure de la position de l'arbre moteur **16**.

Le premier capteur **17** est configuré pour enregistrer les forces centrifuges appliquées sur le support **14**. Il en résulte un signal **Sa** de forme sinusoïdale illustré sur la figure 2 dont l'amplitude **A** représente la force des forces centrifuges.

Tel qu'illustré sur la figure 2, le second capteur **18** génère un signal **Sp** présentant une impulsion électrique à chaque tour de l'arbre moteur **16**. Cette référence de position de l'arbre moteur **16** peut être obtenue par un codeur monté sur l'arbre moteur **16** ou par tout autre dispositif d'indexation, tel qu'un capteur inductif de position ou une cellule photoélectrique. La mesure simultanée du signal sinusoïdal **Sa** et du signal de position **Sp** de l'arbre moteur **16** permet de déterminer le déphasage **D** entre l'arbre moteur **16** et les forces centrifuges.

Une mesure en degré d'une phase $\theta$ est obtenue à partir de ce déphasage **D** en le divisant par la période **P** de l'arbre moteur **16** puis en le multipliant par 360. Le balourd **B(A, $\theta$)** de l'ensemble outil **11**, porte-outil **12** et broche **15** est ainsi obtenu en fonction de l'amplitude **A** et de la phase $\theta$ mesurées.

L'évolution de ce balourd **B(A, $\theta$)** permet de détecter la présence d'un copeau entre un siège **20** d'un porte-outil **12** et un support **14** d'une broche **15** d'une machine-outil.

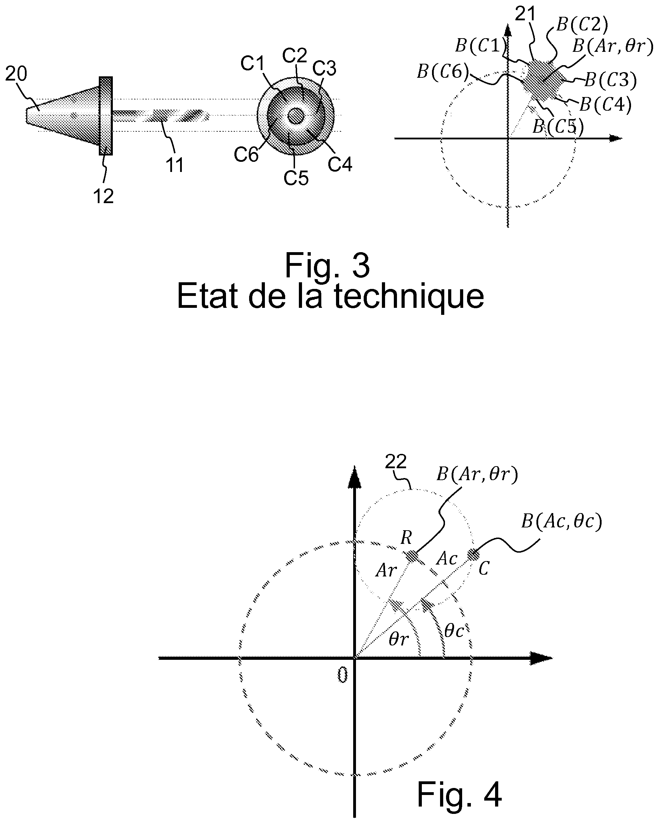

L'invention est issue d'une découverte selon laquelle la position du copeau **C1-C6** sur le siège **20** du porte-outil **12** modifie la mesure du balourd résultant **B(C1)-B(C6).** En effet, tel qu'illustré sur la figure 3, lorsqu'un copeau **C1-C6** prédéterminé est positionné à différentes positions angulaires par rapport à un point de référence de l'arbre moteur **16** et à une même distance de l'extrémité du siège **20**, le balourd résultant **B(C1)-B(C6)** de chaque copeau **C1-C6** évolue dans un périmètre circulaire autour d'un balourd de référence **B(Ar, $\theta$r).**

En utilisant une tolérance directement sur l'amplitude et la phase du balourd de référence **B(Ar, $\theta$r)**, la zone de tolérance autour du balourd de référence **B(Ar, $\theta$r)** forme une portion de couronne **21** dans laquelle les copeaux ne peuvent pas être détectés. Dans l'exemple de la figure 3, les balourds **B(C1)** et **B(C3)** résultant des copeaux **C1** et **C3** ne sont pas détectés car ces balourds **B(C1)**, **B(C3)** sont situés dans la portion de couronne **21** alors que les autres balourds résultant des copeaux **C2** et **C4-C6** sont détectés puisqu'ils sont situés en dehors de cette portion de couronne **21**.

L'invention propose de définir une zone de tolérance circulaire autour du balourd de référence **B(Ar,$\theta$r)** afin d'améliorer la détection des copeaux, notamment lorsqu'ils sont positionnés tels que les copeaux **C1** et **C3**.

Pour ce faire, l'invention propose d'utiliser la norme de la différence entre le balourd mesuré **B(Ac, $\theta$c)** et le balourd de référence **B(Ar, $\theta$r)**. En effet, tel qu'illustré sur la figure 4, en considérant le point de référence **R** et le point courant de mesure **C**, la norme de la différence entre le balourd mesuré **B(Ac, $\theta$c)** et le balourd de référence **B(Ar,$\theta$r)** correspond au vecteur $\overrightarrow{RC}$ avec:

$$\overrightarrow{RC} = \overrightarrow{RO} + \overrightarrow{OC} = \overrightarrow{OC} - \overrightarrow{OR}$$

Les coordonnés de ces vecteurs $\overrightarrow{OC}$ et $\overrightarrow{OR}$ sont :

$$\overrightarrow{OR} = \begin{matrix} Ar\cos\theta r \\ Ar\sin\theta r \end{matrix} \qquad \overrightarrow{OC} = \begin{matrix} Ac\cos\theta c \\ Ac\sin\theta c \end{matrix}$$

Il s'ensuit que le vecteur $\overrightarrow{RC}$ correspond à :

$$\overrightarrow{RC} = \begin{matrix} Ac\cos\theta c - Ar\cos\theta r \\ Ac\sin\theta c - Ar\sin\theta r \end{matrix}$$

La norme de ce vecteur $\overrightarrow{RC}$ est alors décrite par l'équation suivante :

$$\left|\overrightarrow{RC}\right| = \sqrt{(Ac\cos\theta c - Ar\cos\theta r)^2 + (Ac\sin\theta c - Ar\sin\theta r)^2}$$

Cette équation correspond à un cercle **22** de rayon $\left|\overrightarrow{RC}\right|$ et de centre **R.** Par conséquent, l'utilisation de la norme de la différence entre le balourd mesuré $B(Ac, \theta c)$ et le balourd de référence **B(Ar,$\theta$r)** permet de fixer aisément une limite circulaire et centrée sur le point de référence R pour détecter la présence d'un copeau entre le siège **20** d'un porte-outil **12** et le support **14** de broche **15**.

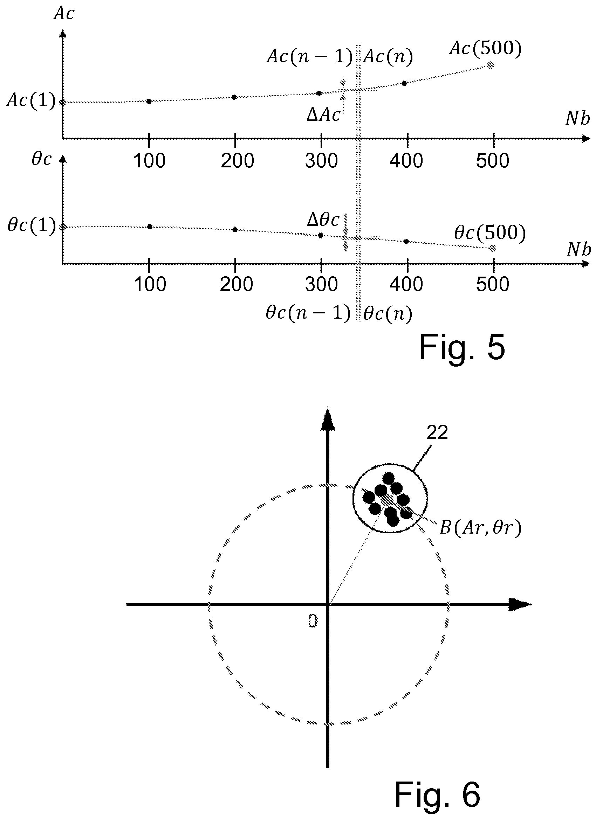

Il a également été constaté que l'amplitude *Ac* et la phase $\theta c$ mesurées évoluent au cours des cycles d'utilisation d'un outil **11**. En effet, tel qu'illustré sur la figure 5, l'amplitude *Ac* mesurée sans la présence de copeau entre le siège **20** et le support **14** de la broche **15** croit lorsque le nombre de pièces usinées *Nb* augmente. La première mesure d'amplitude *Ac(1)* est réalisée alors que l'outil **11** est neuf. L'usure de l'outil **11** n'évolue que très faiblement jusqu'à 200 pièces usinées. À partir de 200 pièces usinées, l'usure de l'outil **11** est plus prononcée et l'amplitude *Ac(n)* augmente plus rapidement. Ainsi, l'amplitude mesurée *Ac(500)* après 500 pièces usinées est bien supérieur à l'amplitude mesurée *Ac(1)* lorsque l'outil **11** est neuf. De la même manière, une déviation de la mesure de la phase $\theta c$ due à l'usure de l'outil **11** montre que la phase mesurée $\theta c$ diminue au cours des cycles d'usinage.

Pour remédier à ce problème, un mode de réalisation de l'invention propose de faire évoluer le balourd de référence *B(Ar, $\theta r$)* au cours des cycles d'utilisation de l'outil **11**. En effet, la différence d'amplitude $\varDelta Ac$ et de phase $\varDelta\theta c$ est très minime entre deux mesures consécutives *Ac(n - 1)-Ac(n)* et $\theta c(n - 1)- \theta c(n)$.

Il s'ensuit qu'il est possible de considérer comme balourd de référence *B(Ar, $\theta r$)* la précédente mesure de balourd *B(Ac, $\theta c$)* pour laquelle aucun copeau n'a été détecté. Il est également possible de déterminer le balourd de référence *B(Ar, $\theta r$)* en fonction de plusieurs mesures précédentes de balourd valides, c'est-à-dire des mesures pour lesquels aucun copeau n'a été détecté. Tel qu'illustré sur la figure 6, il est possible de représenter un nuage **22** avec les dernières mesures de balourd valides et de déterminer la valeur du balourd de référence *B(Ar, $\theta r$)* en calculant le barycentre du nuage **22** constitué des dernières mesures de balourd valides. Ces dernières mesures de balourd valides peuvent également être filtrées pour supprimer des mesures de balourd dont la déviation serait trop importante par rapport à l'évolution normale de l'amplitude ou de la phase.

Il s'ensuit que l'invention permet de détecter plus précisément la présence d'un copeau entre un siège **20** d'un porte-outil **12** et un support **14** d'une broche **15**.

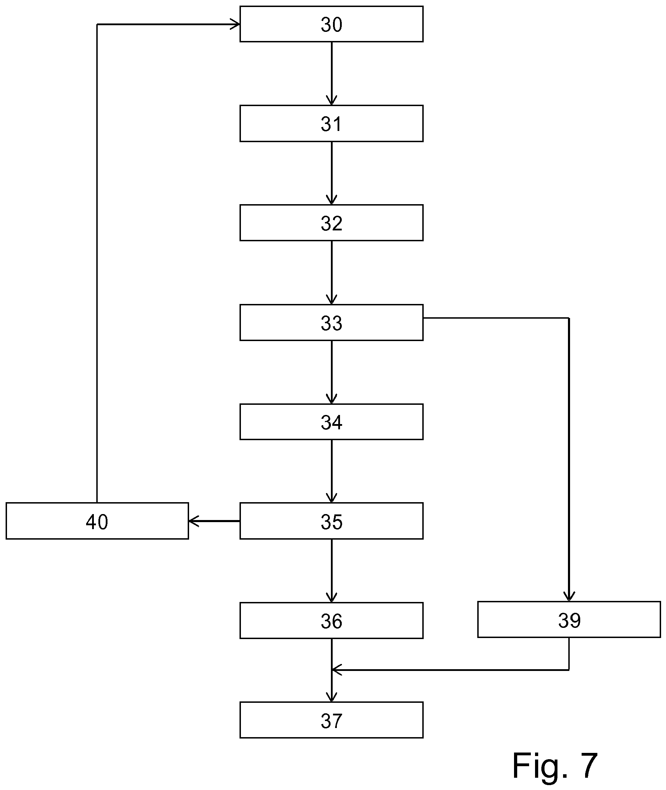

Un exemple de procédé de détection d'un tel copeau est illustré sur la figure 7. Dans une première étape **30**, un nouvel outil **11** monté dans un porte-outil **12** est inséré dans la broche **15**. Pour ce faire, le siège **20** est fixé dans un support **14** de la broche **15**. Dans une seconde étape **31**, l'axe moteur **16** de la broche **15** et mis en rotation et entraîne en rotation l'outil **11**.

Pour détecter la présence d'un copeau, une troisième étape **32** propose de mesurer le balourd *B(Ac, $\theta c$)* en fonction de l'amplitude *Ac* et de la phase $\theta c$ issues des signaux *Sa* et *Sp* des deux capteurs **17** et **18**.

Suite à cette mesure de balourd *B(Ac, $\theta c$),* l'étape **33** vise à déterminer si l'outil **11** monté sur la broche **15** est neuf, c'est-à-dire si une précédente mesure de balourd a déjà été réalisée pour cet outil **11**. Si l'outil **11** est neuf, la mesure de balourd réalisée à l'étape **32** sera enregistrée à l'étape **39** comme balourd de référence *B(Ar, $\theta r$)* pour les prochaines mesures et le procédé passe à l'étape **37** consistant à finaliser le procédé. Dans ce cas spécifique de définition de la première valeur de balourd de référence *B(Ar, $\theta r$)*, l'enceinte dans laquelle évolue l'outil **11** devrait être exempte de copeaux afin que cette première mesure soit toujours réalisée sans la présence de copeaux entre le siège **20** le support **14** de la broche **15**.

Lorsque l'étape **33** de détection d'un outil **11** neuf indique que l'outil **11** n'est pas neuf, le procédé passe à l'étape **34** de calcul de la norme de la différence entre le balourd mesuré *B(Ac, $\theta c$)* et un balourd de référence *B(Ar, $\theta r$)*. Comme indiqué précédemment, ce balourd de référence *B(Ar, $\theta r$)* peut correspondre à une précédente mesure de balourd ou à une moyenne sur les différentes mesures de balourd ou encore à un balourd de référence prédéterminée.

À l'étape **35**, cette valeur de la norme de la différence entre le balourd mesuré *B(Ac, $\theta c$)* et le balourd de référence *B(Ar, $\theta r$)* est comparée à une valeur seuil. Si la norme de la différence est supérieure à la valeur seuil, le procédé détecte la présence d'un copeau et se poursuit à l'étape **40** dans laquelle les mesures de nettoyage du siège **20** et du support **14** de la broche **15** sont mises en oeuvre. À l'issue de cette phase de nettoyage, l'outil **11** est réinséré dans la broche **15** et le procédé recommence à mesurer le balourd en repartant de la première étape **30**.

Au contraire, si l'étape **35** montre que le calcul la norme est inférieur à la valeur seuil, le procédé passe à l'étape **36** visant à sauvegarder la valeur de balourd mesuré *B(Ac, $\theta c$)* pour modifier le balourd de référence *B(Ar, $\theta r$).*

Par exemple, la modification du balourd de référence *B(Ar, $\theta r$)* peut intervenir tel qu'illustré sur la figure 6 en calculant le barycentre entre les vingt dernières mesures de balourd pour lesquelles aucun copeau n'a été détecté.

Pour finir, lorsque le balourd de référence *B(Ar, $\theta r$)* a été nouvellement défini à l'étape **36**, le procédé passe à l'étape **37** de fin de mesure.

L'invention permet ainsi de détecter efficacement un copeau entre un siège **20** d'un porte-outil **12** et un support **14** d'une broche **15** en prenant en compte l'usure de l'outil **11** au cours du temps.

**Revendications**

**1.** Unité de supervision (19) de la présence d'un copeau (C1-C6) entre un siège (20) d'un porte-outil (12) et un support (14) d'une broche (15) d'une machine-outil ; ladite unité de supervision (19) comportant :

- des moyens d'obtention d'un balourd ($B(Ac,\theta c)$) en fonction :

    - d'une amplitude ($Ac$) correspondant à un maximum d'un premier signal ($Sa$) représentant les forces centrifuges appliquées sur ledit siège (20) et/ou ledit support (14) ; et
    - d'une phase ($\theta c$) obtenue en fonction d'un déphasage ($D$) entre ledit premier signal ($Sa$) et un second signal ($Sp$) représentant une position d'un arbre moteur (16) entraînant ladite broche (15) ; et

- des moyens de détermination de la présence d'un copeau (C1-C6) en fonction d'une amplitude ($Ar$) et d'une phase ($\theta r$) de référence ;

**caractérisée en ce que** lesdits moyens de détermination sont configurés pour détecter la présence d'un copeau (C1-C6) lorsque la norme de la différence entre ledit balourd ($B(Ac,\theta c)$) et un balourd de référence ($B(Ar,\theta r)$) est supérieure à une valeur seuil, ledit balourd de référence ($B(Ar,\theta r)$) étant obtenu en fonction de ladite amplitude ($Ar$) et ladite phase ($\theta r$) de référence.

2. Unité de supervision selon la revendication 1, **dans laquelle** ledit balourd de référence ($B(Ar,\theta r)$) est mesuré lors de la première utilisation d'un outil (11) neuf dans un environnement sans copeaux volatiles.

3. Unité de supervision selon la revendication 1, **dans laquelle** ledit balourd de référence ($B(Ar,\theta r)$) correspond à une précédente mesure de balourd ($B(Ac,\theta c)$) dans laquelle aucun copeau n'a été détecté.

4. Unité de supervision selon la revendication 1, **dans laquelle** ledit balourd de référence ($B(Ar,\theta r)$) est estimé en fonction de plusieurs mesures précédentes de balourd ($B(Ac,\theta c)$) dans lesquelles aucun copeau n'a été détecté.

5. Unité de supervision selon la revendication 4, **dans laquelle** lesdites mesures précédentes de balourd ($B(Ac,\theta c)$) dans lesquelles aucun copeau n'a été détecté sont filtrées par lesdits moyens de détermination avant la détermination dudit balourd de référence ($B(Ar,\theta r)$).

6. Système de détection d'un copeau (C1-C6) entre un siège (20) d'un porte-outil (12) et un support (14) d'une broche (15) d'une machine-outil ; ledit système comportant :

    - un premier capteur (17) configuré pour enregistrer, au cours du temps, un premier signal (Sa) représentant les forces centrifuges appliquées sur ledit siège et/ou ledit support (14) ;
    - un second capteur (18) configuré pour enregistrer, au cours du temps, un second signal (Sp) représentant une position d'un arbre moteur (16) entraînant ladite broche (15) ; et
    - une unité de supervision (19) configurée pour détecter la présence d'un copeau (C1-C6) selon l'une des revendications 1 à 5.

7. Système de détection selon la revendication 6, **dans lequel** ledit premier capteur (17) correspond à un capteur d'accélération ou de vibration monté sur ladite broche (15) ou ledit porte-outil (12).

8. Système de détection selon la revendication 6 ou 7, **dans lequel** ledit second capteur (18) correspond à un codeur de position monté sur ledit arbre moteur (16), un capteur inductif de position ou une cellule photoélectrique.

9. Procédé de détection de la présence d'un copeau (C1-C6) entre un siège (20) d'un porte-outil (12) et un support (14) d'une broche (15) d'une machine-outil comportant les étapes suivantes :

    - insertion d'un outil (11) sur ladite broche (15) ; ledit outil (11) étant monté dans ledit porte-outil (12) ;
    - mise en rotation d'un arbre moteur (16) entraînant ladite broche (15) ;
    - mesure d'une amplitude ($Ac$) d'un premier signal ($Sa$) représentant les forces centrifuges appliquées sur ledit siège (20) et/ou ledit support (14) ;
    - mesure d'une phase ($\theta c$) en fonction d'un déphasage ($D$) entre ledit premier signal ($Sa$) et un second signal ($Sp$) représentant une position dudit arbre moteur (16) entraînant ladite broche (15) ;

ledit procédé étant **caractérisé par** les étapes suivantes :

    - détermination d'un balourd ($B(Ac,\theta c)$) en fonction de l'amplitude ($Ac$) et de la phase ($\theta c$) mesurées ;
    - calcul de la norme de la différence entre ledit balourd ($B(Ac,\theta c)$) et un balourd de référence ($B(Ar,\theta r)$) ;

- détection de la présence d'un copeau (C1-C6) lorsque la norme de cette différence est supérieure à une valeur seuil.

10. Procédé de détection selon la revendication 9, *dans lequel* ledit procédé comporte une étape de nettoyage automatique dudit siège (20) et dudit support (14) lorsqu'un copeau est détecté.

**Patentansprüche**

1. Einheit zur Überwachung (19) des Vorhandenseins eines Spans (C1-C6) zwischen dem Sitz (20) eines Werkzeughalters (12) und dem Halter (14) der Spindel (15) einer Werkzeugmaschine;
dabei enthält diese Überwachungseinheit (19):

   - Mittel zum Erhalt einer Unwucht $(B(Ac, \theta c))$ in Abhängigkeit von:
   - einer Amplitude *(Ac)* die dem Maximum eines ersten Signals *(Sa)* entspricht, und die Zentrifugalkräfte repräsentiert, die auf diesen Sitz (20) und/ oder diesen Halter (14) einwirken; und
   - einer Phase $(\theta c)$, erhalten in Abhängigkeit von einer Phasenverschiebung *(D)* zwischen diesem ersten Signal *(Sa)* und einem zweiten Signal *(Sp),* das die Position einer Motorwelle (16) repräsentiert, die diese Spindel (15) antreibt; und
   - Mittel zur Feststellung des Vorhandenseins eines Spans (C1-C6) in Abhängigkeit von der Amplitude *(Ar)* und einer Referenzphase $(\theta r)$;

   *dadurch gekennzeichnet, dass* diese Mittel zur Feststellung konfiguriert sind zum Erkennen des Vorhandenseins eines Spans (C1-C6), wenn die Differenznorm zwischen dieser Unwucht *(B(Ac,$\theta$c))* und einer Referenzunwucht *(B(Ar,$\theta$r))* über einem Schwellenwert liegt, diese Referenzunwucht *(B(Ar,$\theta$r ))* ergibt sich in Abhängigkeit von der erwähnten Amplitude *(Ar)* und der erwähnten Referenzphase $(\theta r)$.

2. Überwachungseinheit nach Anspruch 1, *bei der* diese Referenzunwucht $(B(Ar, \theta r))$ beim ersten Einsatz eines neuen Werkzeugs (11) in einer Umgebung ohne herumfliegende Späne gemessen wird.

3. Überwachungseinheit nach Anspruch 1, *bei der* diese Referenzunwucht *(B(Ar,$\theta$r))* einer vorhergehenden Unwuchtmessung *(B(Ac,$\theta$c ))* entspricht, bei der kein Span erkannt wurde.

4. Überwachungseinheit nach Anspruch 1, *bei der* diese Referenzunwucht $(B(Ar, \Theta r))$ geschätzt wird in Abhängigkeit von verschiedenen Unwuchtmessungen $(B(Ac,\ \theta c))$, bei denen kein Span erkannt wurde.

5. Überwachungseinheit nach Anspruch 4, *bei der* diese vorhergehenden Unwuchtmessungen $(B(Ac,\theta c))$ bei denen keinerlei Span erkannt wurde, durch die erwähnten Mittel zur Feststellung vor der Bestimmung dieser Referenzunwucht $(B(Ar,\theta r))$ gefiltert werden.

6. System zur Erkennung eines Spans (C1-C6) zwischen dem Sitz (20) eines Werkzeughalters (12) und dem Halter (14) der Spindel (15) einer Werkzeugmaschine; dabei enthält dieses System:

   - einen ersten Fühler (17), konfiguriert zur Aufzeichnung über die Zeit, eines ersten Signals (Sa), das die Zentrifugalkräfte repräsentiert, die auf diesen Sitz und/ oder diesen Halter (14) wirken;
   - einen zweiten Fühler (18), konfiguriert zur Aufzeichnung über die Zeit, eines zweiten Signals (Sp), das die Position einer Motorwelle (16) repräsentiert, die diese Spindel (15) antreibt; und
   - eine Überwachungseinheit (19) konfiguriert zur Erkennung des Vorhandenseins eines Spans (C1-C6) nach einem der Ansprüche 1 bis 5.

7. Erkennungssystem nach Anspruch 6, *bei dem* dieser erste Fühler (17) einem Beschleunigungs- oder Vibrationsfühler entspricht, der auf diese Spindel (15) oder diesen Werkzeughalter (12) montiert ist.

8. Erkennungssystem nach Anspruch 6 oder 7, *bei dem* dieser zweite Fühler (18) einem Positionsgeber, der auf der erwähnten Motorwelle (16) montiert ist, einem induktiven Positionsfühler oder einer fotoelektrischen Zelle entspricht.

9. Verfahren zur Erkennung des Vorhandenseins eines Spans (C1-C6) zwischen einem Sitz (20) eines Werkzeughalters (12) und einem Halter (14) einer Spindel (15) einer Werkzeugmaschine, das die folgenden Schritte umfasst:

- Einsetzen eines Werkzeugs (11) in die erwähnte Spindel (15); dieses Werkzeug (11) wird dabei in den Werkzeughalter (12) montiert;
- in Drehung versetzen einer Motorwelle (16), die diese Spindel (15) antreibt;
- Messung einer Amplitude *(Ac)* eines ersten Signals *(Sa)*, das die Zentrifugalkräfte repräsentiert, die auf diesen Sitz (20) und/ oder diesen Halter (14) einwirken;
- Messung einer Phase *($\theta c$)* in Abhängigkeit von einer Phasenverschiebung *(D)* zwischen diesem ersten Signal *(Sa)* und einem zweiten Signal *(Sp)*, das eine Position dieser Motorwelle (16), die die erwähnte Spindel (15) antreibt, repräsentiert;

dieses Verfahren ist durch die folgenden Schritte gekennzeichnet

- Bestimmung einer Unwucht *(B(Ac, $\theta c$))* in Abhängigkeit von der Amplitude *(Ac)* und der gemessenen Phase *($\theta c$)*;
- Berechnung der Differenznorm zwischen dieser Unwucht *(B(Ac, $\theta c$))* und einer Referenzunwucht *(B(Ar, $\theta r$))* ;
- Erkennung des Vorhandenseins eines Spans (C1-C6) wenn die Norm dieser Differenz höher ist als ein Schwellenwert.

10. Erkennungsverfahren nach Anspruch 9, *bei dem* dieses Verfahreneinen Schritt der automatischen Reinigung dieses Sitzes (20) und dieses Halters (14) umfasst, wenn ein Span erkannt wird.

## Claims

1. Unit (19) for monitoring the presence of chips (C1-C6) between a seat (20) of a tool holder (12) and a support (14) of a spindle (15) of a machine tool; said monitoring unit (19) comprising:

   - means for obtaining an imbalance *(B(Ac, $\theta c$))* as a function of:

      - an amplitude *(Ac)* corresponding to a maximum of a first signal *(Sa)* representing the centrifugal forces applied to said seat (20) and/or said support (14); and
      - a phase *($\theta c$)* obtained as a function of a phase-shift (D) between said first signal *(Sa)* and a second signal *(Sp)* representing a position of a drive shaft (16) driving said spindle (15); and

   - means for determining the presence of chips (C1-C6) as a function of an amplitude *(Ar)* and a reference phase *($\theta r$)*;

   *characterized in that* said determination means are configured to detect the presence of chips (C1-C6) when the norm of the difference between said imbalance *(B(Ac, $\theta c$))* and a reference imbalance *(B(Ar, $\theta r$))* is greater than a threshold value, said reference imbalance *(B(Ar, $\theta r$))* being obtained as a function of said amplitude *(Ar)* and said reference phase *($\theta r$)*.

2. Monitoring unit according to claim 1, *wherein* said reference imbalance *(B(Ar, $\theta r$))* is measured during the first use of a new tool (11) in an environment without volatile chips.

3. Monitoring unit according to claim 1, *wherein* said reference imbalance *(B(Ar, $\theta r$))* corresponds to a previous imbalance measurement *(B(Ac, $\theta c$))* in which no chip has been detected.

4. Monitoring unit according to claim 1, *wherein* said reference imbalance *(B(Ar, $\theta r$))* is estimated as a function of a plurality of previous imbalance measurements *(B(Ac, $\theta c$))* in which no chip has been detected.

5. Monitoring unit according to claim 4, *wherein* said previous imbalance measurements *(B(Ac, $\theta c$))* in which no chip has been detected are filtered by said determination means before said reference imbalance *(B(Ar, $\theta r$))* is determined.

6. System for detecting chips (C1-C6) between a seat (20) of a tool holder (12) and a support (14) of a spindle (15) of a machine tool; said system comprising:

   - a first sensor (17) configured to record, over time, a first signal *(Sa)* representing the centrifugal forces applied to said seat and/or said support (14);
   - a second sensor (18) configured to record, over time, a second signal *(Sp)* representing a position of a drive shaft (16) driving said spindle (15); and
- a monitoring unit (19) configured to detect the presence of chips (C1-C6) according to one of claims 1 to 5.

7. Detection system according to claim 6, *wherein* said first sensor (17) corresponds to an acceleration or vibration sensor mounted on said spindle (15) or said tool holder (12).

8. Detection system according to claim 6 or 7, *wherein* said second sensor (18) corresponds to a position encoder mounted on said drive shaft (16), an inductive position sensor or a photoelectric cell.

9. Method for detecting the presence of chips (C1-C6) between a seat (20) of a tool holder (12) and a support (14) of a spindle (15) of a machine tool, comprising the following steps:

- inserting a tool (11) on said spindle (15); said tool (11) being mounted in said tool holder (12);
- rotating a drive shaft (16) driving said spindle (15);
- measuring an amplitude *(Ac)* of a first signal *(Sa)* representing the centrifugal forces applied to said seat (20) and/or said support (14);
- measuring a phase $(\theta c)$ as a function of a phase shift (D) between said first signal *(Sa)* and a second signal *(Sp)* representing a position of said drive shaft (16) driving said spindle (15);

said method being **characterized by** the following steps:

- determinating an imbalance $(B(Ac, \theta c))$ as a function of the measured amplitude *(Ac)* and phase $(\theta c)$;
- calculating the norm of the difference between said imbalance $(B(Ac, \theta c))$ and a reference imbalance $(B(Ar, \theta r))$;
- detecting the presence of chips (C1-C6) when the norm of this difference is greater than a threshold value.

10. The detection method according to claim 9, *wherein* said method comprises a step of automatically cleaning said seat (20) and said support (14) when chips are detected.

Fig. 1
Etat de la technique

Fig. 2
Etat de la technique

Fig. 3
Etat de la technique

Fig. 4

Fig. 5

Fig. 6

Fig. 7

**EP 3 807 729 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0714053 A2